**Europäisches Patentamt**

**European Patent Office**

**Office européen des brevets**

(11) Veröffentlichungsnummer: **0 142 037**
**B1**

# EUROPÄISCHE PATENTSCHRIFT

(45) Veröffentlichungstag der Patentschrift:
**31.01.90**

(51) Int. Cl.⁴: **F 16 B 25/10**

(21) Anmeldenummer: **84112271.6**

(22) Anmeldetag: **12.10.84**

(54) Universalschraube.

Teilanmeldung 87201027 eingereicht am 16.05.87.

(30) Priorität: 14.10.83 DE 3337534
14.10.83 DE 3337535

(43) Veröffentlichungstag der Anmeldung:
**22.05.85 Patentblatt 85/21**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**EP-A- 0 012 441**
**DE-A- 2 917 811**
**DE-A- 3 003 280**
**DE-A- 3 005 166**
**DE-A- 3 022 187**
**DE-A- 3 113 831**
**DE-A- 3 117 624**
**DE-A- 3 242 926**
**DE-B- 2 318 088**
**DE-C- 2 826 933**
**DE-C- 3 016 890**

(73) Patentinhaber: **Knoche, Alfons, Overbergstrasse 7,
D-5758 Fröndenberg (DE)**

(72) Erfinder: **Knoche, Alfons, Overbergstrasse 7,
D-5758 Fröndenberg (DE)**

(74) Vertreter: **Wasmeier, Alfons, Dipl.-Ing. et al,
Postfach 382 Greflingerstrasse 7, D-8400 Regensburg
(DE)**

ACTORUM AG

## Beschreibung

Die Erfindung bezieht sich auf selbstbohrende und/oder selbstformende Universalschrauben mit den Merkmalen des Oberbegriffes des Anspruches 1.

Aus der EP-A-0 012 441 ist eine selbstfurchende Bohrschraube bekannt, die einen an den Schraubkopf anschließenden, furchenden Halteteil und eine an diesen Halteteil anschließende schneidende Bohrspitze aufweist. Die Bohrspitze ist mit einer Ausnehmung versehen, die als Spannut mit scharfer Schneidkante ausgebildet ist, um einen besonders guten Schneideffekt zu erzielen. Die Ausnehmung bzw. Hohlkehle ist Teil einer Zylinderfläche. Längs der gesamten Spannut ist der Krümmungsradius der Hohlkehle gleichbleibend. Bei der Bildung des Oberbegriffes des Anspruches 1 ist von einer derartigen Schraube ausgegangen.

Je nach dem Einsatz in unterschiedlichen Materialien werden Schrauben verwendet, die aufgrund ihrer Geometrie Spezialschrauben sind. So gibt es beispielsweise Holzschrauben, Spanplattenschrauben, Blechschrauben, Kunststoffschrauben usw. Diese für unterschiedlichste Einsatzzwecke bestimmten Schrauben sind in ihrer Charakteristik so konzipiert, daß sie dem jeweiligen Werkstoff, mit dem sie verbunden werden, optimal entsprechen. Bei derartigen Schrauben werden die unterschiedlichsten Spitzenausführungen verwendet, z.B. ausgewalzte Spitzen, Nagelspitzen, Bohrspitzen, Löffelspitzen, Kerbspitzen usw. Diese Spitzen sind zum Teil schneidend, zum Teil formend. Auch die Gewinde solcher Schrauben sind speziell für den beabsichtigten Anwendungszweck ausgelegt.

Dem allgemeinen Wunsche der Industrie bzw. der Verbraucher folgend sind Universalschrauben entwickelt worden, die Spezialschrauben für die unterschiedlichsten Materialien ersetzen, die damit wesentlich günstiger hergestellt werden können, die rationeller eingesetzt werden können, die die Lagerhaltung beim Benutzer erleichtern, etc.

Aus der DE-AS 2 318 088 ist eine selbstschneidende Schraube mit Gewindespitzen bekannt, die als wellenförmige Schneide ausgebildet sind. Eine derartige Schraube weist einen relativ spitzen Flankenwinkel des Gewindes von ca. 40° und ein symmetrisches Gewindeprofil auf, dessen Symmetrieachse von der Senkrechten zur Schraubenachse entgegen der Einschraubrichtung um mindestens 5 Winkelgrade abweicht. Damit soll eine Schraube mit hohem Abreißwiderstand geschaffen werden und die Schneideigenschaft soll durch wesentliche Verringerung der beim Eindringen in ein Werkstück zu überwindenden Reibung verbessert werden.

Aus der DE-OS 3 117 624 ist eine selbstformende Universalschraube bekannt, die anstelle unterschiedlicher Spezialschrauben (Holzschrauben, Blechschrauben, Spanplattenschrauben und dgl.) verwendbar ist. Dies wird dadurch erreicht, daß der Gewindegang in unterschiedlichen Abschnitten der Längserstreckung der Schraube unterschiedliche Scheitelwinkelwerte hat, wobei jeder Scheitelwinkel symmetrisch ausgebildet ist. Eine derartige bekannte Schraube ist mit einem zylindrischen Bund unterhalb des Schraubenkopfes versehen, der eine Länge bzw. Höhe von einigen Gewindegängen hat und dessen Außendurchmesser gleich dem Außendurchmesser des Gewindeganges ausgeführt sein kann. Damit wird das Bruchmoment einer Schraube mit Versenkkopf erheblich verbessert. Er kann weiterhin auch als Zentrierung, z.B. für Beschläge, benutzt werden, und er kann auf seiner Außenfläche eine Profilierung, z.B. Gewindegänge, aufweisen. Es hat sich gezeigt, daß eine derartige bekannte Universalschraube für manche Anwendungsfälle nicht die gewünschte, ausreichende Wirkung ergibt.

Des weiteren ist aus der DE-OS 3 003 280 eine selbstschneidende bzw. selbstfurchende Schraube bekannt, die mit zwei gleich hohen Gewindegängen ausgeführt ist, wobei die Gewindegänge unterschiedlich große Querschnitte besitzen. Mit einer derartigen Schraube werden die Ausreißkräfte verbessert, da durch die unterschiedlich großen Profilquerschnitte der beiden gleich hohen Gewindegänge die Zwischenräume zwischen den Gewindegängen optimal mit verdrängtem Material, wie Holz, Spanplattenmaterial, Kunststoff, Blech oder dgl. ausgefüllt sind, so daß sich eine hohe Haltekraft für die Schraube ergibt. Die Herstellung der Schraube ist jedoch aufwendig und kompliziert.

Eine selbstbohrende Schraube mit einer mit Schraubenkopf vorgesehenen Kupplung zur Übertragung des Drehmomentes, einem Schaft mit Gewinde und einem spitzen Schraubenfuß ist ferner aus der DE-OS 3 005 166 bekannt. Hierbei weist das an die Vor-Formstufe anschließende, tragende Gewinde größervolumige Gewindeflanken auf als das Gewinde der Vor-Formstufe. Ferner ist bei einer derartigen slbstbohrenden Schraube bekannt, im Bereich des dem Schraubenkopf zugewandten Auslaufendes den Außendurchmesser des Gewindeabschnittes zu vergrößern und den Gewindeabschnitt mehrgängig auszubilden sowie den Umfang der im Durchmesser vergrößerten Gewindegänge von der Kreisform abweichend, z.B. fräserförmig gezahnt auszubilden. Eine derartige Profilierung ist jedoch in der Vor-Formstufe nicht vorgesehen, sondern ausschließlich auf den Bereich der vergrößerten Gewindegänge des dem Kopf zugewandten Auslaufbereiches beschränkt.

Des weiteren ist aus der DE-OS 2 917 811 eine gewindeformende Schraube mit einem Schaft und einem Gewindekegel bekannt, der einen ersten und einen zweiten Abschnitt mit unterschiedlicher Kegelsteigung besitzt, wobei das an die Vor-Formstufe anschließende tragende Gewinde größervolumige Gewindeflanken aufweist als das Gewinde der Vor-Formstufe.

Aufgabe der Erfindung ist es, die Bohrspitze einer gattungsgemäßen Schraube so auszubilden, daß sowohl die Bohrung als auch das zu bildende Gewinde durch ausschließlich spanlose Verformung erzeugt werden.

Diese Aufgabe wird mit den Merkmalen des Kennzeichens des Anspruches 1 gelöst. Weitere Ausgestaltungen der Erfindung sind Gegenstand der Unteransprüche.

Mit der Universalschraube nach der Erfindung wird eine Formzone an der Schraube geschaffen, die die Bohrung und das Gewinde im Gegenstück spanlos formt, d.h., daß die Formzone an dieser Schraube keinerlei Schneidkanten erhält, sondern alle Formabschnitte mit entsprechenden Radien versehen sind. Für eine derartige Schraube kann jede Art von Gewinde verwendet werden, z.B. ein Blechschraubengewinde, ein Holzschraubengewinde, ein metrisches Gewinde oder dgl. Das entsprechende Gewinde ist beispielsweise an drei Stellen entsprechend der Formzone mit Einlauf und Auslauf versehen. Dadurch kann das Muttergewinde sehr leicht geformt werden; bei dünnen Blechen entsteht dadurch der besonders wichtige Blechdurchzug, der eine größere Kontaktfläche für das Gewinde ergibt.

Die Universalschraube nach der Erfindung, die ohne Vorbohren des Materials leicht einschraubbar ist, erfüllt die Forderungen nach einer griffigen Spitze, einem geringen Einschraubdrehmoment, wobei je nach Art des Materials auch das Gewinde mit weniger Reibung geformt wird, einem hohen Überdrehmoment und einem hohen Rüttelmoment.

Die Schraubenspitze in Form einer Körnerspitze ist so ausgeführt, daß sie gut ansetzt und zentriert, so daß sie ohne Vorbohren in den Werkstoff eingeschraubt werden kann. Die Spitze hat dabei einen sehr spitzen Winkel und ist vielfächig bzw. profilartig kantig ausgebildet. Das Gewinde verläuft bis zur Spitze bzw. läuft an der Spitze aus, damit die Spitze sofort den Werkstoff erfaßt und sich in ihn einzieht. Die Ausgestaltung der Spitze ist dabei von wesentlicher Bedeutung, da sie für das Einschrauben der Schraube ohne Vorbohren bei kleinem Einschraubdrehmoment entscheidend ist. Die Schraubenspitze soll die Bohrung soweit vorbohren, daß genügend Material vorhanden ist, damit das Muttergewinde geformt werden kann. Das Material, in das die Schraube eingesetzt wird, z.B. Holz oder Spanplatte, darf dabei nicht spleißen, der Kunststoff, insbesondere bei Fenstermaterial, darf nicht erwärmt werden, und bei dünnem Blech leitet die Schraubenspitze das Ausbilden des Muttergewindes ein, wobei eine Kragenbildung im Blech erwünscht ist. Die Schraubenspitze mit Profilierung ist für das gewünschte kleine Einschraubdrehmoment entscheidend; die Spitze formt eine sehr kleine Bohrung, die die Voraussetzung für einen späteren großflächigen Kontakt zwischen Schraube und Muttergewinde ist, wodurch sich ein erwünschtes, hohes Überdrehmoment ergibt.

Weiterhin wird vorgeschlagen, die Schraubenspitze mit Gleitmittel zu versehen bzw. auf der Spitze einen Gleitmittelüberzug aufzubringen, um einen besseren Gleiteffekt zu erzielen. Die Art des Überzuges wird entsprechend dem Werkstoff, in den die Schraube eingeschraubt wird, gewählt. Es hat sich ferner als zweckmäßig herausgestellt, unterschiedliche Arten von Überzügen durch unterschiedliche Farbe zu kennzeichnen, so daß damit der Anwendungszweck der Schraube auf einfachste Weise festgestellt werden kann.

Für eine Schraube ist die Kombination aus Schraubenantrieb, Spitzenausführung und Gewindeform von entscheidender Bedeutung. Diese Faktoren hängen voneinander ab. Mit der Universalschraube nach der Erfindung wird der Bereich gewindeformender Schrauben erweitert, wobei ein leichtes Einschrauben bzw. ein geringes Einschraubdrehmoment mit formendem Gewinde erzielt wird, die Schraube sich dann ohne hohen Kraftaufwand selbständig in das Material hineinzieht, und das Gewinde sich aufgrund der Auslegung der Gewindegeometrie sofort nach dem Durchbohren des Materials formt bzw. furcht. Dabei wird besonders bei dünnem Blech eine Kragenbildung für ein verlängertes Muttergewinde erreicht. Das Gewinde ist so ausgelegt, daß es über die formende Zone im Bereich der Spitze in eine Zone zur weiteren Formung des Gewindes übergeht, in der das Gewinde großvolumiger wird bzw. eine andere Gewindegeometrie bekommt, damit ein maximaler Haftsitz im vorgeformten Muttergewinde erreicht wird. Dies ergibt ein maximales Überdrehmoment und eine maximale Ausreißkraft.

Aufgrund der Abstufung von Zonen unterschiedlicher geometrischer Ausgestaltung ist ein Verformen und Nachformen stets gewährleistet, so daß die Schraube leicht eingeschraubt werden kann. Die damit erreichten Vorteile sind geringes Einbohrmoment, geringes Einschraubmoment, geringes Gewindeformmoment, hohes Überdrehmoment, hohe Ausreißkraft und hohes Rüttelmoment.

Zum Herstellen derartiger Universalschrauben wird ein Werkzeug verwendet, bei dem zwei Gewindewalzbacken zum Walzen des Schraubgewindes eingesetzt werden, und die Gewindespitze gleichzeitig verformt wird. Vorzugsweise werden in das Schraubgewinde bis zum Spitzenauflauf mindestens drei Nuten eingewalzt.

Während üblicherweise Spitzen beim Gewindewalzen gleichzeitig abgeschert und mit Gewinde versehen werden, um die Spitze auszuformen, ist in vorliegendem Fall die Gewindewalzbackenanordnung so ausgebildet, daß gleichzeitig beim Gewindewalzen bis zur Schraubenspitze auslaufende Nuten eingewalzt werden. Hierzu sind sowohl in der feststehenden als auch in der beweglichen Gewindebacke in der Teilung versetzt Profilierungsnocken angeordnet, die beim Gewindewalzen die Nuten mit einformen. Die Gewindenuten werden bei der Walztbackenfertigung so ausgebildet, daß die Gewindenuten an der Stelle der Nocken unterbrochen werden, so daß an dieser Stelle die Schrauben nicht verformt werden und die Nuten an der Schraube entstehen. Diese Profilierungsnocken sind so ausgelegt und angeordnet, daß sie bis zur Kante der Abscherrampe reichen und bis in die äußerste Schraubenspitze auslaufen. Dabei formt die Kante der Abscherrampe die Schraubenspitze, bestimmt die Länge der Schrauben und wird an einem Punkt der Abscherrampe abgeschert, der nach vorne, d.h. zum Gewindebeginn hin versetzt ist. Von diesem Abscherpunkt aus wird das Schraubgewinde in die anschließende Egalisierzone weitergeführt und dort in der Spitze geformt.

Nachstehend wird die Erfindung in Verbindung mit der Zeichnung anhand eines Ausführungsbeispieles erläutert. Es zeigt:

Fig. 1 eine Seitenansicht einer Universalschraube nach der Erfindung, teilweise im Schnitt,

Fig. 2 einen Schnitt durch die Universalschraube nach Fig. 1 längs der Schnittlinie A–B,

Fig. 3 ein Werkzeug zum Herstellen einer Universalschraube nach Fig. 1 in Form eines Gewindewalzbackenpaares, in seitlicher Schnittansicht,

Fig. 4 das Gewindewalzbackenpaar nach Fig. 3 im Einsatz,

Fig. 5 eine Gewindewalzbacke nach Fig. 4 in schematischer Darstellung,

Fig. 6 das Gewindewalzbackenpaar nach Fig. 4 in Arbeitsposition, in schematischer Darstellung und

Fig. 7 einen Schraubenkopf, dessen Innenantrieb im Schnitt dargestellt ist.

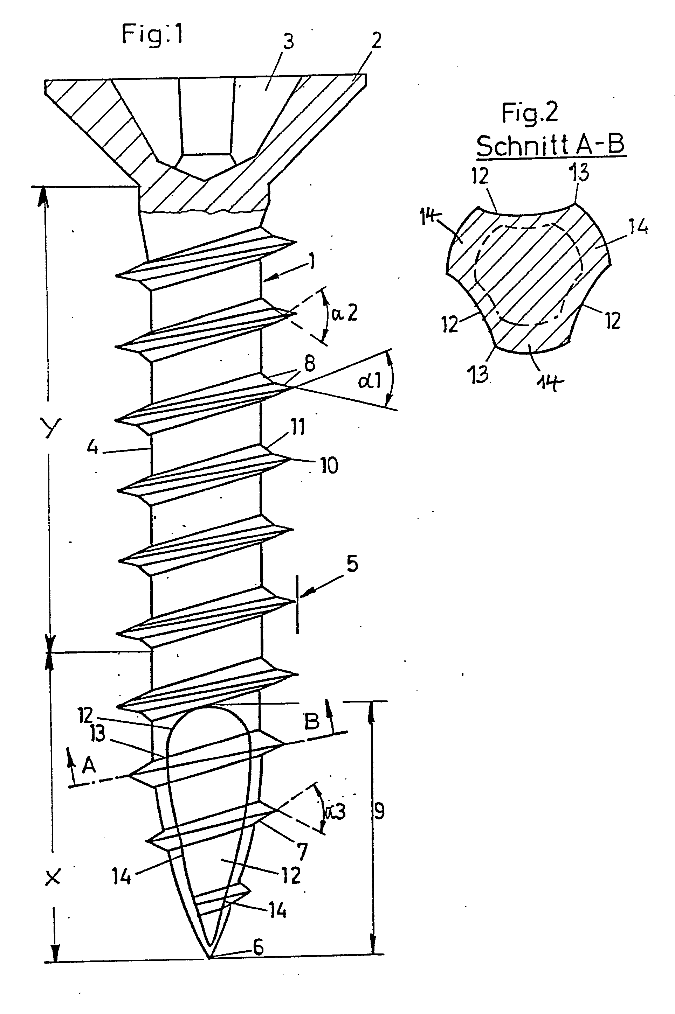

Die Universalschraube 1 nach Fig. 1 weist einen teilweise im Schnitt dargestellten Versenkkopf 2, in dessen Oberseite eine Kreuzschlitzvertiefung 3 zur Aufnahme eines Kreuzschlitz-Schraubendrehers ausgebildet ist, sowie einen Schaft 4 mit Gewinde 5 auf. Der Schaft 4 ist im wesentlichen zylindrisch ausgebildet und läuft am unteren Ende in eine Körnerspitze 6 aus. Das Gewinde 5 ist mit unterschiedlichen Gewindeflanken 7, 8 ausgeführt und besitzt scharfe Gewindespitzen, wie sie für Spanplatten üblich sind.

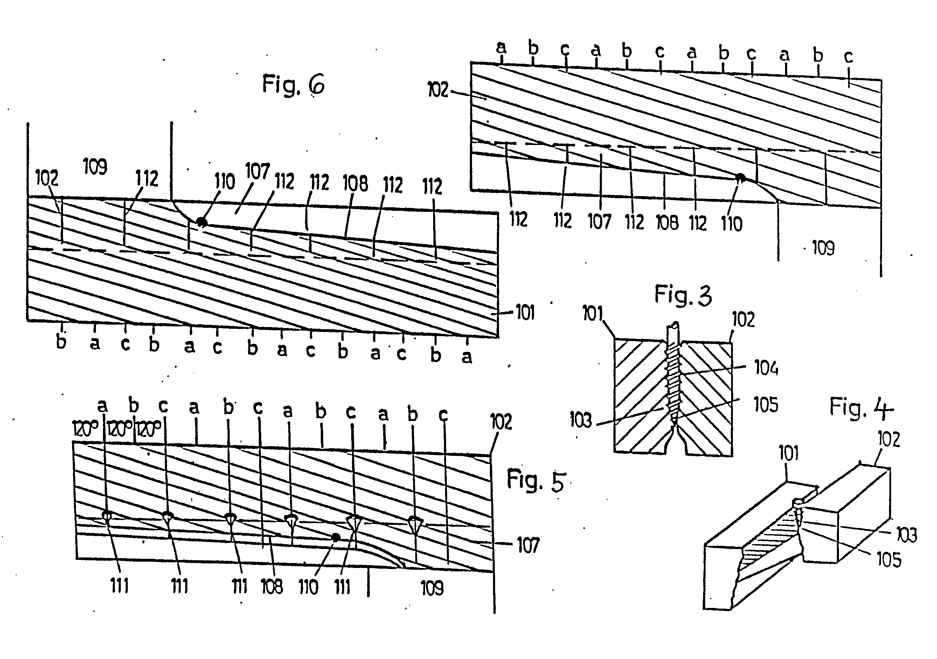

Die Formzone 9 der Schraubenspitze 6 ist ausgewalzt und das Gewinde 5 verläuft bis zur Körnerspitze 6. Die Gewindeflanken des Gewindes 5 sind im Bereich der Formzone 9 als symmetrische Dreiecksformen mit einem Flankenwinkel $\alpha 3$ ausgebildet und gehen im Anschluß an die Formzone 9 in ein Gewinde 8 über. Die Flanke des Gewindes 8 weist zwei unterschiedliche Flankenwinkel $\alpha 1$ und $\alpha 2$ auf. Dabei hat das Gewinde an der Spitze 10 einen kleineren Winkel $\alpha 1$ und am Gewindegangfuß 11 einen größeren Winkel $\alpha 2$. Im vorderen Bereich der Schraubenspitze, d.h. in der Formzone 9, sind teilkreisförmige Kurvenabschnitte bzw. Ausnehmungen 12 ausgebildet und gehen in das Gewinde 5 mit den Gewindeflanken 10 und 11 über. Die Ausnehmungen 12 sind, wie der Querschnittsansicht nach Fig. 2 zu entnehmen ist, in drei Kurvenabschnitte aufgeteilt; es können jedoch im Rahmen vorliegender Erfindung auch mehr als drei Kurvenabschnitte gleichmäßig über den Schraubenumfang verteilt angeordnet sein. Die Ausnehmungen 12 sind so ausgelegt, daß die Spitze 6 genau auf den Arbeitspunkt zentriert ist und sich in den Werkstoff eindrückt, was bei weichen Werkstoffen, z.B. Holz, Kunststoff oder dgl., ohne Kraftaufwand möglich ist. Im Anschluß daran greift das Gewinde 5 in das Material ein und die Schraube zieht sich über die gesamte Formzone 9 und anschließend mit dem eigentlichen Haltegewinde 8 bzw. 10, 11 in den Werkstoff ein. Dieser Vorgang wird ohne hohen Kraftaufwand ausgeführt, weil die Ausnehmungen 12 innerhalb der Formzone 9 aufgrund der Kurvenabschnitte geringe Reibungsflächen bieten und durch den Eigenantrieb über die Gewinde 7 und 8 in das Material hineingezogen werden.

Das Gewinde 8, das sich an die Formzone 9 anschließt, weist einen größervolumigen Querschnitt auf als das Gewinde 7, so daß es die von dem Gewinde 5 vorgeformten Gewindeflanken im Muttergewinde vollflächig ausfüllt und fest im Material sitzt. Dabei ergibt sich ein maximales Überdrehmoment und es kann ein hohes Anschraubdrehmoment ausgeübt werden.

Bei der Verwendung von Blechteilen läuft der gleiche Vorgang ausgehend von der Spitze 6 für das Durchreißen der Bleche ab. Die Spitze 6 hat eine Körnerspitze von nur einigen Zehntel Millimeter und unmittelbar anschließend sind die formenden Ausnehmungen 12 wirksam. Die Spitze 6 zentriert sich auf dem Blech und formt sich durch das Blech durch leichtes Andrücken. Anschließend greift das Gewinde 5 sofort, zieht sich durch die kleine, entstandene Bohrung und formt das Muttergewinde. Die Reibung ist hierbei gering und es ist nur ein geringer Kraftaufwand nötig, weil an dem Gewinde 5 in der Formzone 9 an den jeweiligen Gewindeflanken Formkanten 13 gebildet werden, die die Verformung des Bleches vornehmen und gleichzeitig eine Kragenbildung ergeben, wie dies normalerweise nur mit einem Stanzwerkzeug mit Durchzugstempel erzielt werden kann. Hierbei übernimmt das Gewinde 7 innerhalb der Formzone 9 über die Formkanten 13 die Umformung für das Gewinde und den Durchzug für das verlängerte Muttergewinde. Die Schraube führt diese Umformung drehend aus, so daß dadurch die Reibung nochmals verringert wird.

In Fig. 3 ist das Werkzeug in Form zweier miteinander zusammenwirkender Gewindewalzbacken 101, 102 mit einer zwischen den Backen angeordneten, bearbeiteten Schraube 103 mit Gewinde 104 und Spitze 105 im Schnitt schematisch dargestellt. Fig. 5 zeigt die beiden Gewindewalzbacken 101, 102 mit Schraube 103 im Einsatz. Die Gewindebacke 101 ist dabei beweglich, die Gewindebacke 102 feststehend angeordnet. Aus der Schrägansicht der Fig. 4 ergibt sich die Gewindewalzzone 106 und die darunterliegende Abscherzone 107. Die Egalisierzone 108, die in Fig. 4 durch die bewegliche Backe 101 verdeckt ist, ist in Fig. 5 und 6 zu entnehmen. Aus der Schnittdarstellung nach Fig. 5 und 6 ist im einzelnen die Abscherzone 107 mit ihrer Abscherkante 108, ferner die Egalisierzone 109 und der Abscherpunkt 110 zu entnehmen. Die Profilierungsnocken sind mit 111 bezeichnet und sind in Bearbeitungsrichtung aus walztechnischen Gründen versetzt, z.B. um 240° (eine Umdrehung = 360°). Diese Profilierungsnocken formen beim Gewindewalzen Gewindenuten 112 mit ein, z.B. deren drei, die um 120° gegeneinander versetzt sind und die bis an die Abscherkante 108 reichen. Die Abscherung erfolgt am Abscherpunkt 110, und die Schraube gelangt anschließend in die Egalisierzone 109. In den Fig. 5 und 6 sind die Flächen der Gewindewalzbacken 101, 102 in entsprechender Weise durch die Markierungen a, b, c aufgeteilt, wobei der Abstand zwischen a und b, b und c, c und a jeweils 120° beträgt, wobei eine Schraubenumdrehung 360° entspricht.

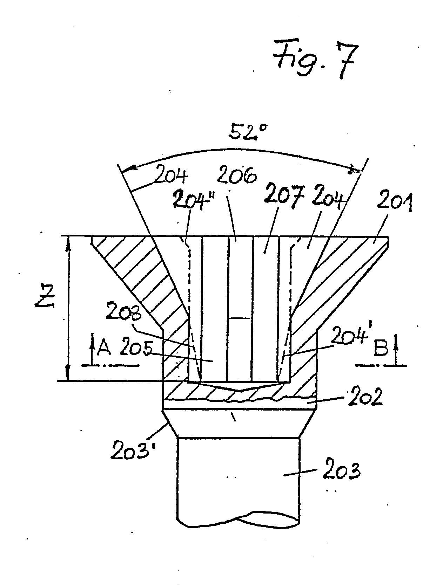

Der im Schnitt dargestellte Schraubenkopf 201 nach Fig. 7 weist einen nach unten gerichteten verlängerten zylindrischen Bund 202 auf, an den sich der Schraubenschaft 203 anschließt. Im Schraubenkopf 201 ist ein oberer Innenantrieb 204 ausgebildet, der in einen zylindrischen Innenantrieb 205 mit Zapfen übergeht. Das Flügelkreuz am Schraubenkopf 201 ist mit 206 bezeichnet, 207 ist die zylindrische Segmentbohrung, und 208 sind weiterlaufende Stege am Zapfen. Mit 209 ist der Umriß der Segmentbohrung 207 bezeichnet. Der Öffnungswinkel des oberen Innenantriebs 204 beträgt bei einer speziellen Ausführungsform der Verbindung 530°, der Innenantrieb 204, 205 hat eine Tiefe Z; im Bereich der Tiefe Z ist die zylindrische Segmentbohrung 207 von den Stegen 206, 208 unterbrochen. Der Profilform-Innenantrieb wird mit Hilfe eines Prägestempels 210 hergestellt. Alternativ ist in Fig. 7 gestrichelt dargestellt, daß der Innenantrieb 204 im inneren Abschnitt anstatt zylindrisch kegelstumpfförmig ausgebildet ist, wobei die gestrichelt angedeutete Schräge im unteren Teil in die Segmentbohrung 207 mündet. Eine weitere Variante der Form des Innenantriebes 204 ist gestrichelt mit 204″ dargestellt.

## Patentansprüche

1. Selbstbohrende oder selbstformende Universalschraube mit einem Schaft (4) mit im wesentlichen konstantem Durchmesser, einer Spitze (6) mit kontinuierlich abnehmendem Durchmesser, einem über Schaft und Spitze durchgehend verlaufenden Gewinde (5) und mit einer im Schraubenkopf (2) vorgesehenen Kupplung (204) zur Übertragung des Drehmomentes, wobei die Spitze mit Ausnehmungen (12) versehen ist, dadurch gekennzeichnet, daß die Ausnehmungen (12) so angeordnet sind, daß eine Körnerspitze (6) verbleibt, daß die Formzone (9) aus den abwechselnd konvexen und konkaven, am Übergang Formkanten (13) ausbildenden Formabschnitten (14) besteht, und daß die Oberflächen der Ausnehmungen (12) mit den Oberflächen der Formzone (9) eine stumpfwinkelige Kante (13) bilden, derart, daß eine Schneidwirkung vermieden wird.

2. Universalschraube nach Anspruch 1, dadurch gekennzeichnet, daß die Formzone (9) ein Gewinde (7) mit geringvolumigem Gangquerschnitt besitzt, und daß an dieses Gewinde (7) ein Gewinde (8) mit größervolumigem Gangquerschnitt anschließt.

3. Universalschraube nach Anspruch 1 oder 2, dadurch gekennzeichnet, daß das Gewinde (7) im Bereich der Formzone (X) einen im Querschnitt gleichbleibenden Gewindegang aufweist (erste Formstufe), daß im Anschluß an diesen Bereich in ca. ein Drittel der Höhe des Schraubenschaftes (4) der Gewindequerschnitt (8) volumenmäßig stetig zunimmt und von einem Scheitelwinkel von z.B. 40° an der Gewindespitze (10) auf einen größeren Scheitelwinkel von z.B. 60° am Gewindegangfuß (11) übergeht, und daß der Querschnitt des Gewindegangprofiles zwei ineinander übergehende Winkel von 60° und 40° aufweist (zweite Formstufe – Nachzieheffekt).

4. Universalschraube nach einem der Ansprüche 1 bis 3, dadurch gekennzeichnet, daß der Scheitelwinkel (a2) des Gewindegangfußes (11) des Gewindeganges (8) in Abhängigkeit vom Abstand von der Gewindespitze (6) einen unterschiedlichen Wert hat, und daß der Scheitelwinkel (a2) im Bereich (Y) des tragenden Gewindes von Gewindegang zu Gewindegang vorzugsweise kontinuierlich um einige Winkelgrade zunimmt und erst im schraubenkopfnahen Bereich des Schraubenschaftes (4) der Scheitelwinkel von 60° erreicht ist.

5. Universalschraube nach einem der Ansprüche 1 bis 4, dadurch gekennzeichnet, daß die Schraube aus einem konischen Rohling hergestellt wird und daß der Schaft (4) der fertigen Schraube konische Form hat.

6. Werkzeug zur Herstellung einer Universalschraube nach einem der Ansprüche 1 bis 5, dadurch gekennzeichnet, daß eine feststehende und eine bewegliche Gewindewalzbacke (101, 102) in der Teilung gegeneinander versetzt angeordnete Profilierungsnocken (111) aufweisen, die beim Gewindewalzen Gewindenuten (112) in die Schraube formen, wobei die Profilierungsnocken (111) bis zum äußersten Rand der Abscherkante (108) ausgebildet sind und z.B. um zwei Drittel einer Schraubenumdrehung (240°) versetzt angeordnet sind.

7. Universalschraube nach einem der Ansprüche 1 bis 6, dadurch gekennzeichnet, daß die Ausnehmungen (12) so angeordnet sind, daß eine Körnerspitze (6) verbleibt, daß die Formzone (9) aus den abwechselnd konvexen und konkaven, am Übergang Formkanten (13) ausbildenden Formabschnitten (14) besteht, daß die Oberflächen der Ausnehmungen (12) mit den Oberflächen der Formzone (9) eine stumpfwinkelige Kante (13) bilden, derart, daß eine Schneidwirkung vermieden wird, und daß die im Schraubenkopf vorgesehene Kupplung so ausgebildet ist, daß die Schlitze (208) in einem unteren, an den oberen anschließenden Bereich senkrecht oder in einem Winkel geringer Konizität verlaufen.

## Claims

1. Self-drilling or self-shaping universal screw with a shank (4) having a substantially constant diameter, a tip (6) with a continuously decreasing diameter, a thread (5) passing continuously over the shank and tip and a coupling (204) located in screw head (2) for transferring the torque, the tip being provided with recesses (12), characterized in that the recesses (12) are arranged in such a way that a work centre (6) is left, that the shaping zone (9) comprises alternately convex and concave shaping portions (14) forming shaping edges (13) at the transition and that the surfaces of the recesses (12) from with the surfaces of the shaping zone (9) an obtuse-angled edge (13), in such a way that a cutting action is avoided.

2. Universal screw according to claim 1, characterized in that the shaping zone (9) has a thread (7) with a small-volume cross-section and that said thread (7) is followed by a thread (8) with a larger volume cross-section.

3. Universal screw according to claims 1 or 2, characterized in that in the vicinity of the shaping zone (X) the thread (7) has a constant cross-section (first shaping stage), that following onto said area in approximately one third of the height of the screw shank (4) there is a constant increase to the volume of the thread cross-section (8) and passes from a vertex angle of e.g. 40° at the crest (10) to a larger vertex angle of e.g. 60° at the root (11) and that the cross-section of the thread has two angles of 60 and 40° passing into one another (second shaping stage – redrawing effect).

4. Universal screw according to one of the claims 1 to 3, characterized in that the vertex angle (a2) of the root (11) of thread (8) has a different value as a function of the distance from the tip (6) and the vertex angle (a2) in the area (Y) of the supporting thread increases in a preferably continuous manner by a few radians between the individual threads and only in the area of the screw shank (4) close to the screw head reaches the vertex angle of 60°.

5. Universal screw according to one of the claims 1 to 4, characterized in that the screw is produced from a conical blank and that the shank (4) of the finished screw is conical.

6. Tool for producing a universal screw according to one of the claims 1 to 5, characterized in that a fixed and a movable thread rolling die (101, 102) have profiling cams (111) displaced with respect to one another in the spacing and which during thread rolling shape flutes (112) in the screw, the profiling cams (111) being constructed up to the outermost shearing edge (108) and are e.g. displaced by two thirds of a screw rotation (240°).

7. Universal screw according to one of the claims 1 to 6, characterized in that the recesses (12) are arranged in such a way that a work centre (6) remains, that the shaping zone (9) comprises alternating convex and concave shaping portions (16) forming shaping edges (13) at the transition, that the surfaces of the recesses (12) form an obtuse-angled adge (13) with the surfaces of the shaping zone (9), in such a way that a cutting action is avoided and that the coupling provided in the screw head is constructed in such a way that the slots (208) are located in a lower area following on to the upper area in perpendicular manner or in a smaller conicity angle.

**Revendications**

1. Vis universelle autoforeuse ou d'autoformage avec une tige (4) ayant sensiblement un diamètre constant, une pointe (6) à diamètre diminuant de manière continue, un filetage (5) disposé de manière continue sur la tige et la pointe et un organe d'accouplement (204) prévu dans la tête de vis pour la transmission du couple, la pointe étant munie d'évidements (12), caractérisée en ce que les évidements (12) sont disposés de manière telle qu'il subsiste une pointe de centrage (6), la zone de formage (9) est constituée des sections de formage (14) alternativement convexes et concaves formant des arêtes de formage (13) à la transition et les surfaces des évidements (12) forment avec les surfaces de la zone de formage (9) une arête (13) à angle obtus de sorte qu'on évite une action de coupe.

2. Vis universelle selon la revendication 1, caractérisée en ce que la zone de formage (9) possède un filetage (7) de faible section transversale de spire correspondant à un faible volume de filet et que ce filetage (7) est raccordé à un filetage (8) de section plus grande correspondant à un filet plus volumineux.

3. Vis universelle selon la revendication 1 ou 2, caractérisée en ce que le filetage (7) présente des spires de section restant identique sur l'étendue de la zone de formage (X) (première étape de formage), qu'à la suite de cette étendue dans environ un tiers de la hauteur de la tige de vis (4) le volume du filet (8) augmente de manière continue et passe d'un angle opposé au sommet de par exemple 40° au sommet de filet (10) à un angle plus grand de par exemple 60° au pied de filet (11) et la section du profil du filetage présente deux angles se transformant l'un dans l'autre de 60° et 40° (deuxième étape de formage – effet de réétirage).

4. Vis universelle selon l'une des revendications 1 à 3, caractérisée en ce que l'angle opposé au sommet (a2) du pied de filet (11) de la spire (8) a une valeur différente en dépendance de la distance de la pointe (6) et l'angle opposé au sommet (a2) augmente de préférence de manière continue de quelques degrés de spire à spire, dans la région (Y) du filetage porteur, et l'angle opposé au sommet de 60° est seulement atteint dans la région de la tige (4) proche de la tête de vis.

5. Vis universelle selon l'une des revendications 1 à 4, caractérisée en ce que la vis est produite à partir d'une pièce brute conique et la tige (4) de la vis finie a une forme conique.

6. Outil pour la production d'une vis universelle selon l'une des revendications 1 à 5, caractérisé en ce qu'une mâchoire à filet fixe et une mâchoire à filet mobile (101, 102) comportent des mentonnets de profilage (111) disposés de manière décalée dans la séparation qui réalisent les rainures (112) dans la vis lors du laminage des filets, les mentonnets de profilage (111) étant formés jusqu'au bord extrême de l'arête de cisaillement et sont par exemple disposés décalés des deux tiers d'un tour de vis (240°).

7. Vis universelle selon l'une des revendications 1 à 6, caractérisée en ce que les évidements (12) sont disposés de manière telle qu'il subsiste une pointe de centrage (6), la zone de formage (9) est constituée des sections de formage (14) alternativement convexes et concaves, formant des arêtes de formage (13) à la transition, les surfaces des évidements (12) forment avec les surfaces de la zone de formage (9) une arête (13) à angle obtus de manière telle qu'on évite une action de coupe et l'organe d'accouplement prévu dans la tête de vis est agencé de manière telle que les fentes (208) sont disposées dans une région inférieure faisant suite à la région supérieure, perpendiculairement ou en un angle de faible conicité.

Fig:1

Fig.2
Schnitt A-B

Fig. 3

Fig. 4

Fig. 5

Fig. 6

Fig. 7